# EUROPEAN PATENT APPLICATION

(11) **EP 3 182 111 A1**
(43) Date of publication of application: **21.06.2017**
(21) Application number: 16002589.6
(22) Date of filing: 06.12.2016
(51) Int. Cl.: G01N 27/62

(54) **DETECTION OF COMPOUNDS BY IMS THROUGH DOPANT-ASSISTED PHOTOIONIZATION**

(30) Priority: 18.12.2015 US 201514974137
(71) Applicant: Morpho Detection, LLC, Newark, CA 94560 (US)
(72) Inventor: DAVILA, Stephan, Newark, California 94560 (US); SCHMIDT, Hartwig, Newark, California 94560 (US); LAI, Hanh, Newark, California 94560 (US); VILKOV, Andrey, Newark, California 94560 (US); LUKOW, Stephan, Newark, California 94560 (US)
(74) Representative: Müller-Boré & Partner Patentanwälte PartG mbB

(57) **Abstract**

Method and apparatus for dopant-assisted photoionization to detect substances of interest by ion mobility spectrometry (IMS). Various dopants such as a combination anisole and ammonium carbamate can be used through the disclosed methods and processes to detect explosives such as tri-acetone tri-peroxide (TATP).

## Description

### BACKGROUND OF THE DISCLOSURE

The embodiments described herein relate generally to the ability to use dopant-assisted photoionization to detect substances of interest. Various dopants can be used through the disclosed methods and processes to detect substances such as, for example, explosives, narcotics, illicit substances and the like.

Ion mobility spectrometers are used to detect at least selected constituents in a stream of a sample gas. An ion mobility spectrometer (IMS) may be used, for example, to detect the presence of contaminants in air or to detect substances of interest. Dopant vapors have been added in the gas stream entering the spectrometer to achieve further selectivity of substances of interest.

Additionally, a photoionizer has been used in combination with an IMS. The photoionizer includes a light source which directs a beam of photons into a gas sample. The light beam contains energy which is high enough to ionize the trace molecules but typically below the energy level which typically causes fragmentation. Photoionization can therefore provide more reliable data from the spectrometer.

There remains a need, however, to use a combination of an IMS and a photoionizer with dopant assistance to ionize and detect certain compounds of interest, such as explosives.

### BRIEF DESCRIPTION OF THE DISCLOSURE

In one aspect of the present disclosure, a method for detecting a substance is provided. The method comprises delivering a sample gas stream including molecules into an ionization chamber of an ion mobility spectrometer. The method also includes introducing a dopant into the chamber, wherein the dopant includes a substituted hydrocarbon compound, wherein the hydrocarbon is substituted with at least one of a halogen, an alkyl group containing at least two carbon atoms, and an alkoxy group. The method also includes ionizing at least one molecule of the gas stream and the dopant within the chamber. The method also includes performing an analysis of the sample molecule. The method also includes detecting a substance within the sample molecule.

In another aspect of the present disclosure, a substance detection system is provided. The system includes an ion mobility spectrometer. The system also includes an ionization source including an ionization chamber, the ionization source configured to ionize at least one sample gas molecule and a dopant. The system also includes a sample supply system coupled in flow communication with the ionization chamber, the sample supply system configured to introduce at least a portion of a sample of gas including molecules into the ionization chamber and further configured to introduce at least a portion of a dopant into the ionization chamber, wherein the dopant includes a substituted hydrocarbon compound, wherein the hydrocarbon is substituted with at least one of a halogen, an alkyl group containing at least two carbon atoms, and an alkoxy group. The system also includes a spectrometric analysis device coupled in flow communication with the ionization chamber, the spectrometric analysis device configured to perform a spectrometric analysis of the ionized molecules, wherein the analysis includes detecting a substance within the molecules.

In another aspect of the present disclosure, a method for detecting a substance is disclosed. The method comprises delivering a sample gas stream including molecules into an ionization chamber of an ion mobility spectrometer. The method also includes introducing a dopant into the chamber, wherein the dopant includes at least one of a hydrocarbon compound and a substituted hydrocarbon compound. The method also includes introducing an ammonia compound into the chamber. The method also includes ionizing at least one molecule of the gas stream, the dopant and the ammonia compound within the chamber. The method also includes performing an analysis of the sample molecule. The method also includes detecting a substance within the sample molecule

### BRIEF DESCRIPTION OF THE DRAWINGS

FIG. 1 is an exemplary embodiment of a substance detection system in accordance with the present disclosure.
FIG. 2 is a graphical depiction of the dopant chemistry comparison of exemplary dopants and substances in accordance with the present disclosure.
FIG. 3 is a graphical depiction of the dopant chemistry comparison of exemplary dopants and substances in accordance with the present disclosure.
FIG. 4 is a graphical depiction of the dopant chemistry comparison of exemplary dopants and substances in accordance with the present disclosure.
FIGs. 5A and 5B are 2-D plots of an exemplary embodiment of the present disclosure testing for the presence of TATP.
FIG. 6 is a plasmagram comparison of the presence of TATP in accordance with embodiments of the present disclosure.
FIG. 7 is a plasmagram comparison of the presence of TATP in accordance with embodiments of the present disclosure.
FIG. 8 is a plasmagram comparison of the presence of TATP in accordance with embodiments of the present disclosure.
FIG. 9 is a plasmagram comparison of the presence of TATP in accordance with embodiments of the present disclosure.
FIG. 10 is a plasmagram comparison of the presence of TATP in accordance with embodiments of the present disclosure.

### DETAILED DESCRIPTION OF THE DISCLOSURE

The embodiments disclosed herein improve detection of substances of interest (e.g., explosives) through dopant-assisted photoionization in an ion mobility spectrometer (IMS). The dopants disclosed herein aid in the ionization and detection of compounds such as, but not limited to, explosives, narcotics, chemical warfare agents, illicit substances, precursors, volatiles, and organics.

More specifically, in one embodiment of the present disclosure, a method for detecting a substance is disclosed. The method comprises delivering a sample gas stream including molecules into an ionization chamber of an ion mobility spectrometer, introducing a dopant into the chamber, wherein the dopant includes a substituted hydrocarbon compound, wherein the hydrocarbon is substituted with at least one of a halogen, an alkyl group containing at least two carbon atoms, and an alkoxy group, ionizing at least one molecule of the gas stream and the dopant within the chamber, performing an analysis of the sample molecule, and detecting a substance within the sample molecule.

In another embodiment of the present disclosure, a substance detection system is disclosed. The detection system comprises an ion mobility spectrometer, an ionization source including an ionization chamber, the ionization source configured to ionize at least one sample gas molecule and a dopant, a sample supply system coupled in flow communication with the ionization chamber, the sample supply system configured to introduce at least a portion of a sample of gas including molecules into the ionization chamber and further configured to introduce at least a portion of a dopant into the ionization chamber, wherein the dopant includes a substituted hydrocarbon compound, wherein the hydrocarbon is substituted with at least one of a halogen, an alkyl group containing at least two carbon atoms, and an alkoxy group, and a spectrometric analysis device coupled in flow communication with the ionization chamber, the spectrometric analysis device configured to perform a spectrometric analysis of the ionized molecules, wherein the analysis includes detecting a substance within the molecules.

In yet another embodiment of the present disclosure, a method for detecting a substance is disclosed. The method comprises delivering a sample gas stream including molecules into an ionization chamber of an ion mobility spectrometer, introducing a dopant into the chamber, wherein the dopant includes at least one ofa hydrocarbon compound and a substituted hydrocarbon compound, introducing an ammonia compound into the chamber, ionizing at least one molecule of the gas stream, the dopant and the ammonia compound within the chamber, performing an analysis of the sample molecule, and detecting a substance within the sample molecule.

The methods disclosed herein include delivering a sample gas stream into an ionization chamber of an ion mobility spectrometer. The sample gas stream includes gas molecules. The gas molecules are from samples that may contain a substance of interest that is detected by the IMS. In some embodiments, the gas stream comprises an inert carrier gas, such as nitrogen, which feeds the sample to be tested for molecules of a substance of interest into the IMS. In other embodiments, other carrier gases are used, such as air, oxygen, sulfur hexafluoride, helium, carbon dioxide, or argon depending upon the preferred ion detection.

The ionization chamber is from any ionization source that enables operation of the methods and systems as described herein, including, without limitation, a chemical ionization (CI) source, a photoionization (PI) source, a glow discharge (GD) source, a dielectric barrier discharge (DBD) source, a radioactive ionization source, an electrospray ionization source (ESI), an atmospheric pressure chemical ionization (APCI) source, an atmospheric pressure photoionization (APPI) source, an atmospheric pressure glow discharge (APGD) source, a direct analysis in real time (DART) source, and an atmospheric pressure dielectric barrier discharge (APDBD) source. In preferred embodiments, the ionization source is a photoionization or atmospheric pressure photoionization source and the ionization chamber is a photoionization or atmospheric pressure photoionization chamber. When the ionization chamber is a photoionization or atmospheric pressure photoionization chamber, the at least one gas stream molecule and dopant are photoionized in the chamber.

The dopant is introduced into the ionization chamber. The dopant is introduced into the ionization chamber to assist in detecting the substance. In some embodiments, the dopant includes a substituted hydrocarbon compound, wherein the hydrocarbon is substituted with at least one of a halogen, an alkyl group containing at least two carbon atoms, and an alkoxy group. In some embodiments, the dopant includes at least one of anisole, bromotoluene, bromobenzene and ethyl benzene. The dopant alters the electrochemical characteristics of the sample gas molecules, which improves the efficiency of the ionization process. Other suitable dopants for the present disclosure include sulfur-based compounds as well as compounds having a silicon atom center or chain.

In accordance with the present disclosure, the dopant is introduced into the chamber at a concentration rate that produces detection of the substance of interest. In some embodiments, the dopant is introduced into the chamber at a concentration rate of from about 0.1 µg/min to about 250 µg/min, from about 1 µg/min to about 25 µg/min, from about 5 µg/min to about 20 µg/min, or from about 10 µg/min to about 15 µg/min. In other embodiments, the dopant is introduced into the chamber at a concentration rate of from about 3 µg/min to about 20 µg/min, from about 3 µg/min to about 10 µg/min, or from about 18 µg/min to about 25 µg/min.

In some embodiments of the present disclosure, the dopant includes bromotoluene. In some embodiments, the bromotoluene is introduced into the chamber at a concentration rate of from about 0.1 µg/min to about 250 µg/min, from about 10 µg/min to about 15 µg/min, or about 12 µg/min. In some embodiments, the bromotoluene is 4-bromotoluene. 4-Bromotoluene is particularly advantageous to use in the present disclosure due to its lower flammability rating compared to toluene and it has a longer storage stability since 4-bromotoluene is a solid at room temperature and less volatile in its solid form. 4-Bromotoluene is often overlooked because it is sometimes confused in the industry with benzyl bromide, which is a lachrymator that has been used as a chemical warfare agent as a strong irritant.

In other embodiments, the dopant includes anisole. In some embodiments, the anisole is introduced into the chamber at a concentration rate of from about 0.1 µg/min to about 250 µg/min, from about 3 µg/min to about 20 µg/min, about 3 µg/min, about 6.5 µg/min, about 8 µg/min, or about 20 µg/min.

The method includes ionizing at least one molecule of the gas stream and the dopant within the chamber. In other embodiments, the method includes ionizing at least one molecule or the dopant within the chamber. By adding the dopant to the chamber, Applicant has surprisingly found critical and unexpected results of effectively detecting substances within the gas stream sample. That is, by adding the dopant during the ionization, ion formation and any further possible ion reactions or recombination in the drift tube also become stable due to the presence of the dopant in the drift gas.

The method also includes performing an analysis of the sample molecule that is ionized in an IMS, an ion trap mobility spectrometer, a differential mobility spectrometer, aspiration ion mobility spectrometer, and/or a mass spectrometer.

The method then includes detecting a substance within the sample molecule that is ionized. In some embodiments, the substance detected includes at least one of ammonium nitrate (AN), hexamethylene triperoxide diamine (HMTD), composition C-4 (C4), semtex, 2,4,6-trinitrophenylmethylnitramine (TETRYL), tri-acetone tri-peroxide (TATP), ammonium nitrate fuel oil (ANFO), urea nitrate (UN), trinitrotoluene (TNT), ethylene glycol dinitrate (EGDN), nitroglycerin (NG), pentaerythritol tetranitrate (PETN), high melting explosive (HMX), peroxides, Research Department Explosive (RDX), nitro-containing explosives (e.g., nitro, nitroaromatics, nitroesters), nitrate, inorganic oxidizers, nitramines, energetic materials, conventional explosives (i.e., homemade and/or military explosives), and combinations thereof.

In some embodiments, the method further includes introducing an ammonia compound, such as ammonium carbamate, into the ionization chamber prior to, during, or after ionizing the at least one sample gas molecule and dopant. In some embodiments, the ammonium carbamate is introduced into the chamber at a concentration rate of from about 0.1 µg/min to about 150 µg/min. Addition of the ammonium carbamate leads to improved detection of certain substances, such as TATP, contraband compounds (e.g., narcotics) and other compounds containing NH4 adduct ions. In some embodiments, when used in combination with anisole as the dopant, detection of various substances is improved. In some embodiments, the improved detection is a result of a cleaner background if peaks from the compounds with lower proton affinity are suppressed through the combination of anisole and an ammonia compound.

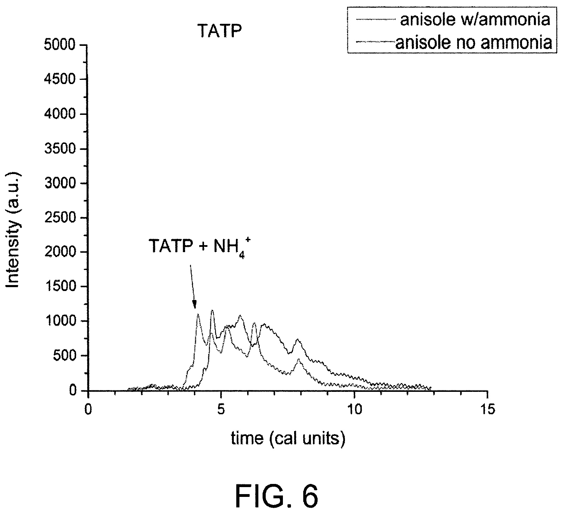

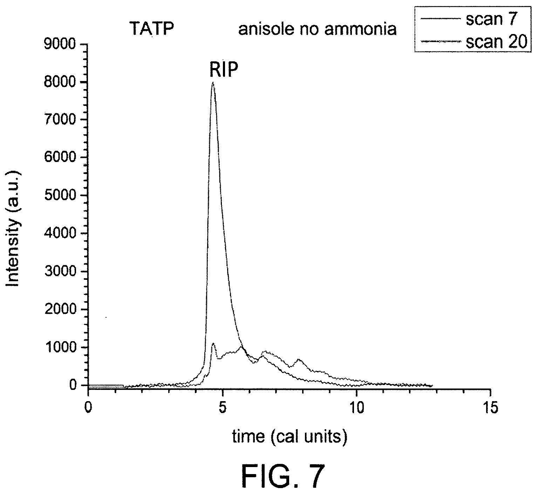

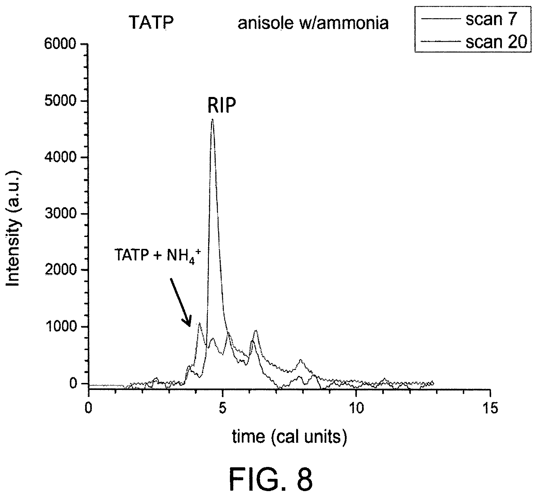

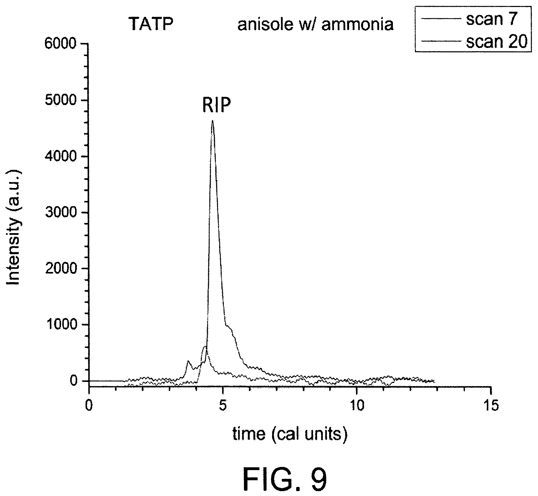

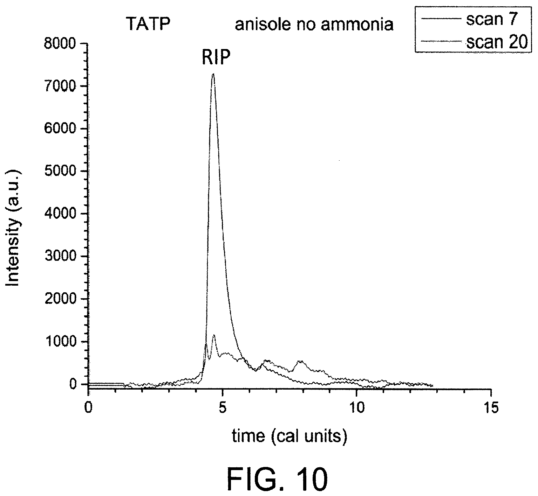

FIGs. 6-10 disclose plasmagram comparisons of detection of TATP with and without the presence of ammonium carbamate in combination with anisole. FIGs. 6 and 8 disclose a peak presence of TATP at about 4.1 intensity units when the anisole is used in combination with the ammonium carbamate, whereas this peak is absent when anisole is used alone. FIG. 7 discloses a plasmagram comparison of two separate scans for the presence of TATP without ammonium carbamate included. Again, the peak at about 4.1 is missing from the scan done without ammonium carbamate included. FIGs. 9 and 10 show the plasmagram comparisons of scans for the presence of TATP with and without ammonium carbamate included with the anisole. Once again, a strong peak is present at about 4.1 intensity units for the scan with a combination of anisole and ammonium carbamate that is not present when anisole is used alone.

In some embodiments of the present disclosure, the method comprises introducing a dopant into the chamber in combination with an ammonia compound. The dopant includes at least one of a hydrocarbon compound and a substituted hydrocarbon compound. In some embodiments, the dopant includes benzene, toluene, bromotoluene, anisole, ethyl benzene, bromobenzene, or combinations thereof. In some embodiments, the ammonia compound is ammonia carbamate.

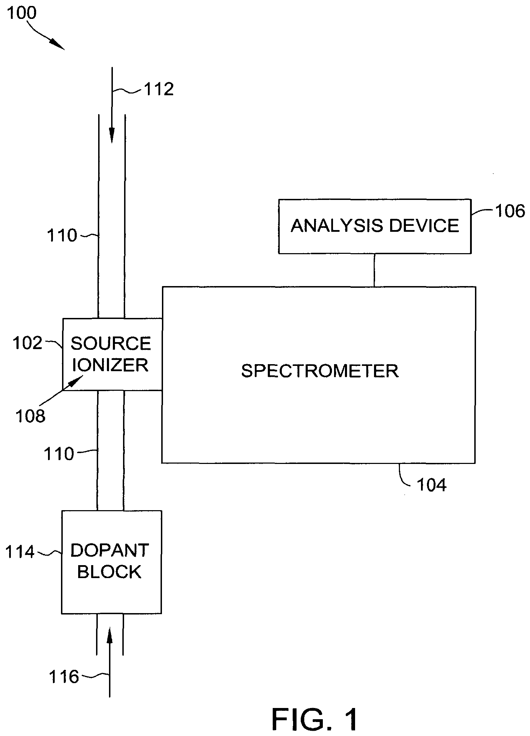

The present disclosure is also directed to a substance detection system. An exemplary substance detection system 100 is disclosed in Fig. 1. The detection system 100 includes a spectrometer 104, such as an IMS. The system 100 includes an ionization source 102 including an ionization chamber 108. The ionization source 102 is configured to ionize a sample gas 112 and a dopant.

A sample supply system 110 is coupled in flow communication with the ionization chamber 108. The sample supply system 110 is configured to introduce at least a portion of a sample of gas 112 including molecules into the ionization chamber 108 and further configured to introduce at least a portion of a dopant (released from the dopant block 114) into the ionization chamber 108, wherein the dopant includes a substituted hydrocarbon compound, wherein the hydrocarbon is substituted with at least one of a halogen, an alkyl group containing at least two carbon atoms, and an alkoxy group. In some embodiments, the sample supply system 110 includes a drift gas introduced via an intake 116 and flows across a dopant block 114, releasing the dopant and carrying it to the chamber 108.

The system also includes a spectrometric analysis device 106 coupled in flow communication with the ionization chamber 108, the spectrometric analysis device is configured to perform a spectrometric analysis of the ionized molecules, wherein the analysis includes detecting a substance within the molecules.

The ionization source 102 ionizes the sample molecules, the ions of which are analyzed by the spectrometer 104. The ionization source 102 carries out ionization inside the ionization chamber 108 where the sample gas molecules, dopants and ambient air are present. In some embodiments, the gas sample 112 and the dopant within the ionization chamber 108 are ionized by a light beam emitted from a light source (not shown). In some embodiments, the light beam has a wavelength so that photo-energy between about 7.0 and 12.0 electron volts (eV) is delivered to the chamber 108. In some embodiments, the ionization chamber 108 is located within the ionization source 102, or within the spectrometer 104, or is coupled to either the ionization source 102, the spectrometer 104, or coupled to both the ionization source 102 and spectrometer 104.

In some embodiments, the spectrometer 104 carries out spectrometric measurements to screen sample molecules for certain target substances, such as, for example, explosives and drugs. Results of the spectrometry carried out by the spectrometer 104 are analyzed by analysis device 106.

Some embodiments of the detection system 100 involve the use of one or more electronic or computing devices. Such devices typically include a processor or controller, such as a general purpose central processing unit (CPU), a graphics processing unit (GPU), a microcontroller, a reduced instruction set computer (RISC) processor, an application specific integrated circuit (ASIC), a programmable logic circuit (PLC), and/or any other circuit or processor capable of executing the functions described herein. The methods described herein may be encoded as executable instructions embodied in a computer readable medium, including, without limitation, a storage device and/or a memory device. Such instructions, when executed by a processor, cause the processor to perform at least a portion of the methods described herein. The above examples are exemplary only, and thus are not intended to limit in any way the definition and/or meaning of the term processor.

### EXAMPLES

The following examples describe or illustrate various embodiments of the present disclosure. Other embodiments within the scope of the appended claims will be apparent to a skilled artisan considering the specification or practice of the disclosure as described herein. It is intended that the specification, together with the Examples, be considered exemplary only, with the scope of the disclosure being indicated by the claims, which follow the Examples.

### Example 1

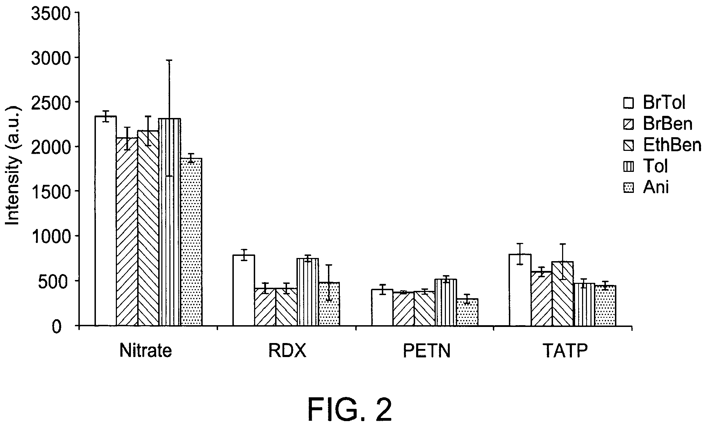

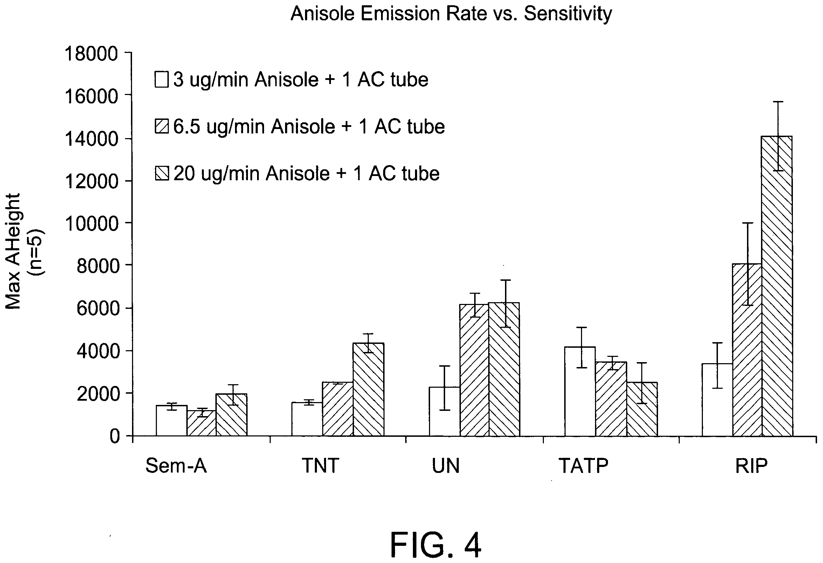

In this example, molecules of four different substances of interest - nitrate, RDX, PETN and TATP - were used in a sample gas stream in the method in accordance with the present disclosure. An Itemiser 4DX alpha prototype unit with a photoionization detector (PID) bulb vacuum ultraviolent (VUV) Kr 10.6 eV source was used with a commercial off-the-shelf driver. The samples were introduced into an ionization chamber along with five different dopants - 4-bromotoluene (12 µg/min), bromobenzene (11 µg/min), ethyl benzene (14 µg/min), anisole (8 µg/min) and toluene (9 µg/min). The results of the detection are disclosed in Fig. 2. As can be seen in Fig. 2, 4-bromotoluene, bromobenzene, ethyl benzene and anisole were all effective at detecting the presence of all four substances of interest that were tested.

### Example 2

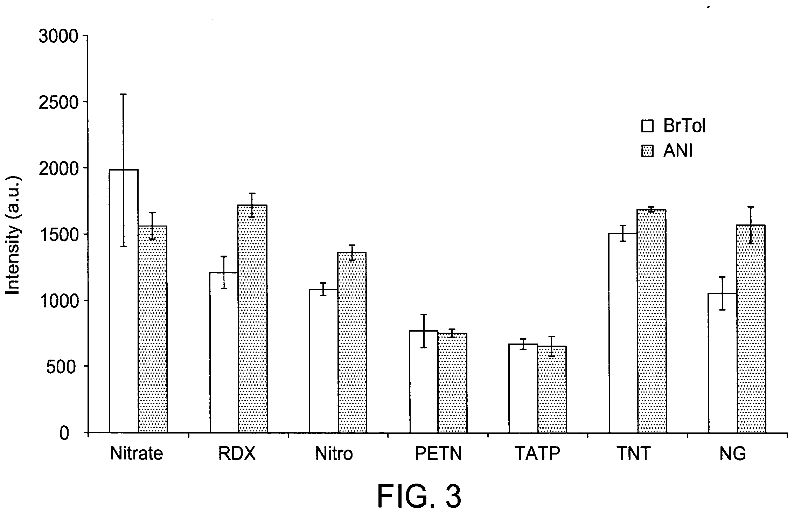

In this example, 4-bromotoluene (about 13 µg/min) and anisole (about 12 µg/min) were tested as dopants in accordance with the methods of the present disclosure in order to detect the following substances from sample gas streams - nitrate, RDX, nitro, PETN, TATP, TNT and NG. As seen in FIG. 3, both 4-bromotoluene and anisole were effective at detecting the presence of each substance of interest tested.

### Example 3

In this example, three different anisole dopant concentration ranges (3, 6.5 and 20 µg/min) were tested in combination with the addition of 1 tube of ammonium carbamate in accordance with the methods of the present disclosure in order to detect the following substances from sample gas streams - SEM-A, TNT, UN , TATP, RIP. As seen in FIG. 4, the combination of anisole and ammonium carbamate was effective at detecting the presence of each substance of interest tested.

### Example 4

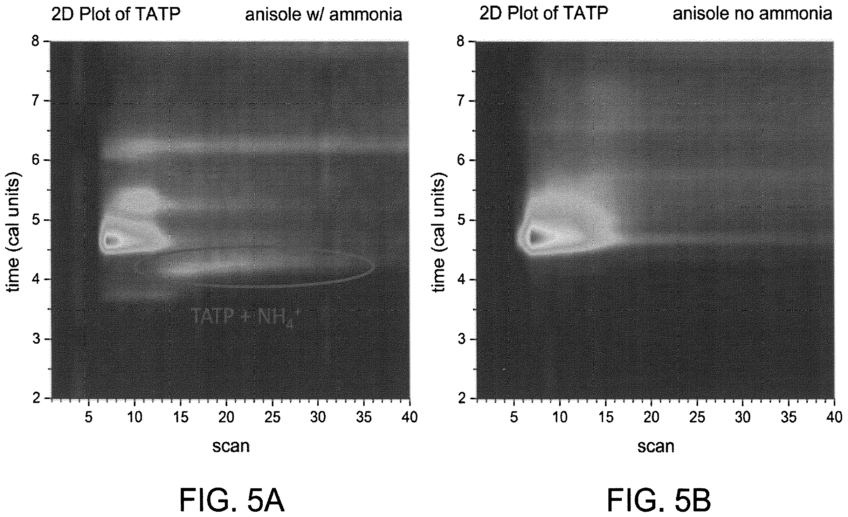

This example studied the effect of detection of TATP with and without the addition of ammonium carbamate to a dopant gas. FIGs. 5A and 5B disclose a 2-D top-down view (intensity plot) of Itemiser 4DX collected spectra for this example. FIG. 5A discloses a measurement displaying the detection of TATP run with anisole as the dopant and ammonium carbamate as an additional dopant inserted into the ionization chamber. As can be seen in FIG. 5A, a peak is shown at about 4.1 with improved detection/sensitivity compared to the plot without ammonium carbamate, at which the same amount of TATP was introduced (FIG. 5B). Thus, as seen in FIGs. 5A and 5B, when ammonium carbamate is used in combination with anisole, the IMS is able to better detect the presence of TATP in a sample gas.

Exemplary embodiments of substance detection systems for determining the presence of substances of interest, and methods of operating such systems are not limited to the specific embodiments described herein, but rather, components of systems and/or steps of the methods may be utilized independently and separately from other components and/or steps described herein. For example, the methods may also be used in combination with other systems requiring determining the presence of substances of interest, and are not limited to practice with only the substance detection systems and methods as described herein. Rather, the exemplary embodiment can be implemented and utilized in connection with many other substance detection applications that are currently configured to determine the presence of substances of interest.

Although specific features of various embodiments of the disclosure may be shown in some drawings and not in others, this is for convenience only. In accordance with the principles of the disclosure, any feature of a drawing may be referenced and/or claimed in combination with any feature of any other drawing.

This written description uses examples to disclose the disclosure, including the best mode, and also to enable any person skilled in the art to practice the disclosure, including making and using any devices or systems and performing any incorporated methods. The patentable scope of the disclosure is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims.

## Claims

1. A method for detecting a substance, the method comprising:
delivering a sample gas stream including molecules into an ionization chamber of an ion mobility spectrometer;
introducing a dopant into the chamber, wherein the dopant includes a substituted hydrocarbon compound, wherein the hydrocarbon is substituted with at least one of a halogen, an alkyl group containing at least two carbon atoms, and an alkoxy group;
ionizing at least one molecule of the gas stream and the dopant within the chamber;
performing an analysis of the sample molecule; and,
detecting a substance within the sample molecule.

2. The method of claim 1, wherein the chamber is a photoionization chamber and the at least one gas stream molecule and dopant are photoionized.

3. The method of claim 1 or 2, wherein the dopant includes at least one of anisole, bromotoluene, bromobenzene and ethyl benzene.

4. The method of any one of claims 1 to 3, wherein the substance detected includes at least one of ammonium nitrate (AN), nitroglycerin (NG), pentaerythritol tetranitrate (PETN), Research Department Explosive (RDX), and combinations thereof.

5. The method of any one of claims 1 to 4, wherein the dopant is introduced into the chamber at a concentration rate of from about 0.1 µg/min to about 250 µg/min.

6. The method of any one of claims 1 to 5, further including introducing ammonium carbamate into the ionization chamber prior to, during, or after ionizing the at least one gas molecule and dopant.

7. A substance detection system comprising:
an ion mobility spectrometer;
an ionization source including an ionization chamber, the ionization source configured to ionize at least one sample gas molecule and a dopant;
a sample supply system coupled in flow communication with the ionization chamber, the sample supply system configured to introduce at least a portion of a sample of gas including molecules into the ionization chamber and further configured to introduce at least a portion of a dopant into the ionization chamber, wherein the dopant includes a substituted hydrocarbon compound, wherein the hydrocarbon is substituted with at least one of a halogen, an alkyl group containing at least two carbon atoms, and an alkoxy group; and,
a spectrometric analysis device coupled in flow communication with the ionization chamber, the spectrometric analysis device configured to perform a spectrometric analysis of the ionized molecules, wherein the analysis includes detecting a substance within the molecules.

8. The system of claim 7, wherein the chamber is a photoionization chamber and the at least one gas molecule and dopant are photoionized.

9. The system of claim 7 or 8, wherein the dopant includes at least one of anisole, bromotoluene, bromobenzene and ethyl benzene.

10. The system of any one of claims 7 to 9, wherein the substance detected includes at least one of ammonium nitrate (AN), nitroglycerin (NG), pentaerythritol tetranitrate (PETN), Research Department Explosive (RDX), and combinations thereof.

11. The system of any one of claims 7 to 10, wherein the dopant is introduced into the chamber at a concentration rate of from about 0.1 µg/min to about 250 µg/min.

12. The system of any one of claims 7 to 11, further including introducing ammonium carbamate into the ionization chamber prior to, during, or after ionizing the at least one gas molecule and dopant.

13. A method for detecting a substance, the method comprising:
delivering a sample gas stream including molecules into an ionization chamber of an ion mobility spectrometer;
introducing a dopant into the chamber, wherein the dopant includes at least one of a hydrocarbon compound and a substituted hydrocarbon compound;
introducing an ammonia compound into the chamber;
ionizing at least one molecule of the gas stream, the dopant and the ammonia compound within the chamber;
performing an analysis of the sample molecule; and,
detecting a substance within the sample molecule.

14. The method of claim 13, wherein the ammonia compound is ammonium carbamate.

15. The method of claim 13 or 14, wherein the substance detected includes at least one of ammonium nitrate (AN), nitroglycerin (NG), pentaerythritol tetranitrate (PETN), Research Department Explosive (RDX), and combinations thereof.
